Europäisches Patentamt

(19) European Patent Office

Office européen des brevets

(11) Publication number : **0 404 741 B1**

## (12) EUROPEAN PATENT SPECIFICATION

(45) Date of publication of patent specification :
09.03.94 Bulletin 94/10

(51) Int. Cl.⁵ : **C03C 3/072, C03C 8/24, G11B 5/29**

(21) Application number : **90850196.8**

(22) Date of filing : **21.05.90**

(54) **Low wear closure glass for magnetic tape heads.**

(30) Priority : **19.06.89 US 367733**

(43) Date of publication of application :
**27.12.90 Bulletin 90/52**

(45) Publication of the grant of the patent :
**09.03.94 Bulletin 94/10**

(84) Designated Contracting States :
**DE FR GB**

(56) References cited :
**DE-A- 1 596 995**
**US-A- 2 316 742**
**US-A- 3 493 405**
**US-A- 4 435 511**
**CHEMICAL ABSTRACTS, vol. 109, no. 22, 28 November 1988 Columbus, Ohio, USA page 364; ref. no. 195922B & JP-A-63170240**
**CHEMICAL ABSTRACTS, vol. 106, no. 6, 09 February 1987 Columbus, Ohio, USA page 289; ref. no. 37473Q & JP-A-61151038**

(73) Proprietor : **International Business Machines Corporation**
**Old Orchard Road**
**Armonk, N.Y. 10504 (US)**

(72) Inventor : **Daughenbaugh, Gerald Allen**
**11221 E. Stampede Place**
**Tucson, AZ 95749 (US)**
Inventor : **Rigby, Eugene Bertrand**
**4442 N. Twilight Trail**
**Tucson, AZ 85749 (US)**

(74) Representative : **Burt, Roger James, Dr. et al**
**IBM United Kingdom Limited Intellectual Property Department Hursley Park**
**Winchester Hampshire SO21 2JN (GB)**

## Description

The subject invention generally relates to the closure glass used in multitrack magnetic tape heads and, more particularly, to a new glass formulation with improved wear properties for use as the closure glass.

Description of the Prior Art

Lead oxide based glasses are commonly used for the closure glass in multitrack tape heads because of their compatibility with Nickel-Zinc (NiZn) ferrite. A typical example of a lead oxide based glass in common use for multitrack tape heads is IBM 400 glass. Table 1 details the composition IBM 400 glass.

TABLE 1

| CONSTITUENT | WEIGHT PERCENT |
| --- | --- |
| Lead Oxide (PbO) | $68.0 \pm 0.5\%$ |
| Silicon Oxide ($SiO_2$) | $20.8 \pm 0.5\%$ |
| Boron Oxide ($B_2O_3$) | $7.0 \pm 1.5\%$ |
| Aluminum Oxide ($Al_2O_3$) | $4.2 \pm 1.5\%$ |
| Remainder | $0.5\%$ Maximum |

IBM 400 glass has an annealing point (glass viscosity = $10^{13}$ poise) of 435°C, a softening point (glass viscosity = $10^{7.6}$ poise) of 530°C, a working point (glass viscosity = $10^4$ poise) of 695°C and a coefficient of thermal expansion equal to $70*10^{-7} \pm 3.0*10^{-7}/$°C. IBM 400 glass has superior properties in terms of its compatibility with NiZn ferrite; however, the glass has a high wear rate compared to that of the ferrite in the magnetic tape head.

Borosilicate based glasses have higher hardness and better wear attributes compared to lead oxide glasses. Borosilicate glass having Corning® glass code 7740 has an annealing point of 565°C, a softening point of 821°C, a working point of 1252°C, and a coefficient of thermal expansion equal to $32.5*10^{-7}/$°C. Lead borosilicate glass having Corning® glass code 7570 has an annealing point of 363°C, a softening point of 440°C, a working point of 560°C, and a coefficient of thermal expansion equal to $84*10^{-7}/$°C. However, neither borosilicate glass having Corning® glass code 7740 nor lead borosilicate glass having Corning® glass code 7570 are acceptable for bonding with NiZn ferrite.

U.S. Patent 4,638,387 to Mukasa et al. discloses the use of borosilicate glass as an impregnating material for filling fine voids in a sliding contact member used in conjunction with a magnetic tape head. U.S. Patent 4,069,360 to Yanagisawa et al. discloses the use of a polysilicate layer, which may be borosilicate glass, coated with a lubricant to protect and reduce frictional wearing of the recording disc on which it is coated and the surface of the magnetic recording head. U.S. Patent 4,170,032 to Yokoyama et al. discloses a magnetic head wherein borosilicate glass is sputter deposited in the gap area. U.S. Patent 4,110,804 to Castrodale et al. discloses the use of lead borosilicate glass for bonding parts of the transducer in a read/write and tunnel erase magnetic head assembly. None of the above-patents show or discuss the use of borosilicate based glass as a closure glass in a multitrack tape head.

Prior art multitrack tape heads suffer from excessive wear of the closure glass. When the closure glass wears down at a faster rate than the ferrite, the tape head becomes unreliable. The superior wear characteristics of borosilicate based glasses have not been applied in multitrack tape heads because of their incompatibility with NiZn ferrite.

SUMMARY OF THE INVENTION

The present invention is defined in the attached claims.

It is therefore an object of this invention to provide a multitrack tape head with improved wear characteristics which utilizes a borosilicate based glass composition.

It is another object of this invention to provide a glass composition compatible with NiZn ferrite which is a combination of borosilicate glass and lead borosilicate glass.

It is yet another object of this invention to provide a closure glass in which the wear characteristics can be regulated by adjusting the anneal cycle.

According to the invention, lead borosilicate glass having Corning® glass code 7570 (3% wt $SiO_2$, 11% wt $Al_2O_3$, 12% wt $B_2O_3$, 0% wt $Na_2O$, 74% wt Pbo) has been combined with borosilicate glass having Corning® glass code 7740 (81% wt $SiO_2$, 2% wt $Al_2O_3$, 13% wt $B_2O_3$, 4% wt $Na_2O$, 0% wt Pbo) to form a new glass which has improved attributes for use as a closure glass. Experiments were performed from which it was determined that an optimum weight percentage ratio of lead borosilicate glass to borosilicate glass was a 60/40 ratio. The 60/40 ratio of lead borosilicate glass to borosilicate glass produced the best results in terms of melting temperature, ferrite compatibility, stress and wear.

A powdered mixture of 60% by weight lead borosilicate glass and 40% by weight borosilicate glass was put on the surface of a slotted write closure slab (a ferrite slab with slots cut therein). The slab was then placed in an oven and the glass was melted in a procedure called "glassing". Glass bubbles were then removed using a "hipping" procedure. Finally, the glass was annealed. Experiments were performed in which it was determined that 510°C was the optimum anneal temperature. It was determined that the residual stress in the glass, which is a function of the anneal cycle, can affect the wear characteristics of the glass produced. Wear bar samples were prepared from the slabs and were tested using a media abrasivity test procedure.

## BRIEF DESCRIPTION OF THE DRAWINGS

The foregoing and other objects, aspects and advantages of the invention will be better understood from the following detailed description of the preferred embodiments of the invention with reference to the accompanying drawings, in which:

Figure 1 is an isometric view of a closure section in a multitrack head;

Figure 2 is an isometric view of a multitrack tape head;

Figures 3-5 are time versus temperature profiles of the oven temperature used for the steps of glassing, hipping, and annealing, respectively;

Figure 6 and 7 are a graphical representation of bow stress test results versus the anneal temperature utilized for a glass sample; and

Figures 8-10 are plots of the media abrasivity test results for wear bars which use IBM 400 glass, high stress lead borosilicate glass/borosilicate glass, and low stress lead borosilicate glass/borosilicate glass, respectively.

## DETAILED DESCRIPTION OF THE PREFERRED EMBODIMENTS OF THE INVENTION

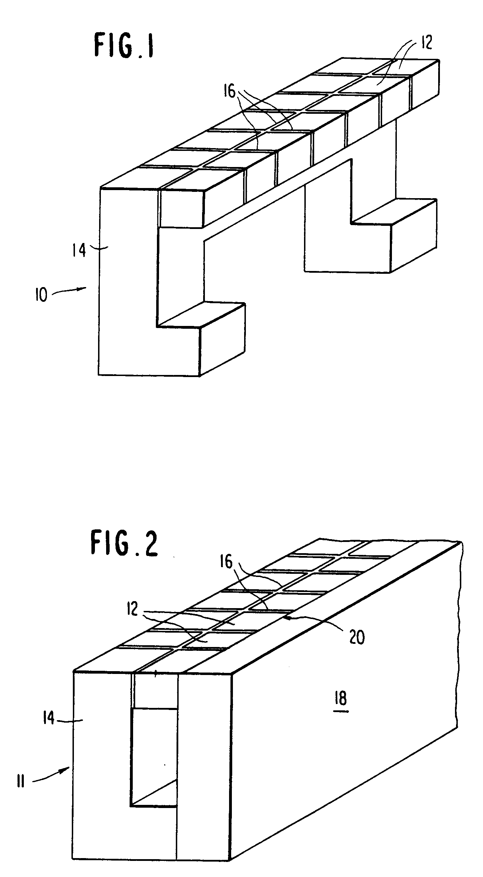

Referring now to the drawings and, more particularly to Figure 1, there is shown a closure section 10 for a multitrack tape head. A row of magnetic ferrite blocks 12 are supported by a substrate 14. The ferrite blocks 12 and substrate 14 are joined together by the closure glass 16. The width of the ferrite blocks 12 determine the width of the data tracks and the width of the closure glass 16 between the ferrite blocks 12 establishes the separation distance between the data tracks.

Figure 2 shows a multitrack tape head 11 where a ferrite wafer 18 having the same length and width as closure section 10 is spaced from the closure section 10 by a transducing gap 20. The transducing gap 20 coacts with a magnetic medium such as a tape or disc which is being written on. Fabrication of the multitrack head 11 is not specifically important to this invention and may be done according to well known techniques of which U.S. Patent 4,366,518 to Chow et al., 4,396,967 to Argumendo et al., and IBM TDB Vol. 18, No. 6, pp. 1981-1984, 1975 by Franklin et al. are but a few examples. This invention is primarily concerned with the wear characteristics of the closure glass 16 used in the multitrack tape head 11.

Lead borosilicate glass is available from the Corning glass company of New York and is sold under Corning® glass code 7570. The lead borosilicate glass is finely powdered and may be applied by dipping, extruding, silk screening, or by other suitable techniques. A slurry of the glass can be prepared by adding a suitable vehicle to the glass such as amyl acetate and 1.2% by weight nitrocellulose. Lead borosilicate glass has a working point equal to 560°C, where the working point is defined by a glass viscosity equal to $10^4$ poise. The coefficient of thermal expansion for lead borosilicate glass is equal to $84*10^{-7}$ in/in/°C.

Borosilicate glass is available from the Corning glass company of New York and is sold under Corning® glass code 7740 (which is a low expansion borosilicate glass). Like lead borosilicate glass, the borosilicate glass is available in powder form and can be applied by the techniques discussed above. Borosilicate glass has a working point equal to 1252°C and a coefficient of thermal expansion equal to $33*10^{-7}$ in/in/°C. Both lead borosilicate glass and borosilicate glass have high corrosion resistance.

The inventors have determined experimentally that a combination of lead borosilicate glass and borosilicate glass will produce a new glass which is suitable for use in multitrack magnetic tape heads. A 70/30 weight percent mixture of lead borosilicate glass to borosilicate glass was compatible with NiZn ferrite and had a melting temperature equal to 870°C. The 70/30 glass had good properties generally but was subject to excessive wear. A 50/50 weight percent mixture of lead borosilicate glass to borosilicate glass had a melting temperature equal to 980°C, too high for NiZn ferrite compatibility. In addition, the 50/50 glass had a tendency to crack because of its highly stressed state when incorporated within the slots of the write closure pieces (i.e., closure glass 16 in Figure 1). A 60/40 weight percent mixture of lead borosilicate glass to borosilicate glass had the optimum characteristics for use as the closure glass 16 in a multitrack tape head. The 60/40 glass had a melting temperature of 920°C and a coefficient of thermal expansion which was suitable for use with NiZn ferrite. Acceptable composition limits are a 55/45 weight percent mixture of lead borosilicate glass to borosilicate glass to a 65/35 weight percent mixture of lead borosilicate glass to borosilicate glass. If the lead borosilicate component exceeds 65%, stress is too great and wear is too high. If the borosilicate component exceeds 45%, stress again is too great and the glassing temperature required for processing causes unacceptable ferrite grain boundary attack.

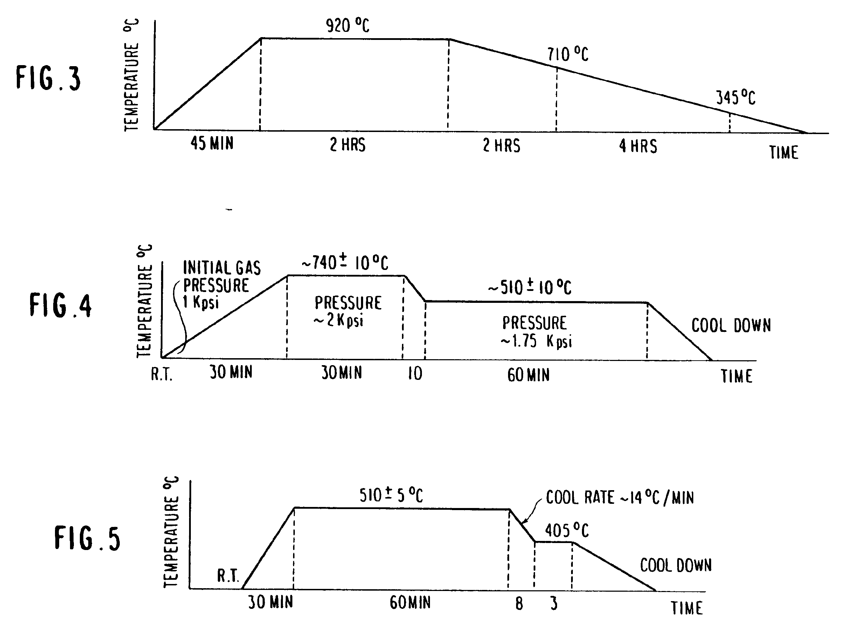

Figures 3 through 5 show the time, temperature, and pressure conditions used for glassing, hipping, annealing the 60/40 glass combination. Figure 3 shows the temperature profile for the step of glassing. The lead borosilicate glass and the borosilicate glass were combined in powder form in a 60/40 weight percent mixture. After being thoroughly mixed, approximately three to four grams of the powder combination was placed on the surface of a slab of NiZn ferrite which had multiple slots cut in the top surface. The slab with the glass powder was placed into an infra-red heating furnace. The glass was melted on the slab, thereby filling in the slots, by heating the slab to 920°C during a forty five minute ramp interval, then holding the temperature at 920°C for two hours, then decreasing the temperature to 710°C during a two hour interval, then decreasing the temperature to 345°C during a four hour interval, and finally returning the oven to room temperature.

Figure 4 shows the process of "hipping" was performed under both controlled temperature and pressure conditions. Hipping is a procedure designed to remove any glass bubbles present in the glass. Upon removal from the infra-red furnace used in glassing, the glassed, ferrite slabs were placed in an isostatic furnace. During a thirty minute interval the furnace temperature was increased from room temperature to 740°C. The gas pressure for the furnace during the thirty minute ramp was initially 1000 pounds per square inch (psi). The pressure increases as a function of temperature and was approximately 2000 psi at 740°C. This temperature and pressure were maintained for thirty minutes at which time the temperature was reduced to 510°C and the pressure reduced to 1750 psi over a ten minute interval, and the temperature and pressure were held constant for an hour before the isostatic furnace was cooled down.

Figure 5 shows the anneal heating cycle which is performed in the infra-red furnace. Annealing is a heating and slow cooling process used to toughen the glass and reduce brittleness. The glassed and hipped, ferrite slabs are placed in the infra-red furnace and the temperature of the furnace is ramped to 510°C from room temperature over a thirty minute interval, then the furnace temperature is held constant for one hour, then the furnace is cooled to 405°C at a cooling rate equal to 14°C ± 2°C/minute over an eight minute time interval and the furnace is held constant at 405°C for three minutes before it is finally cooled down.

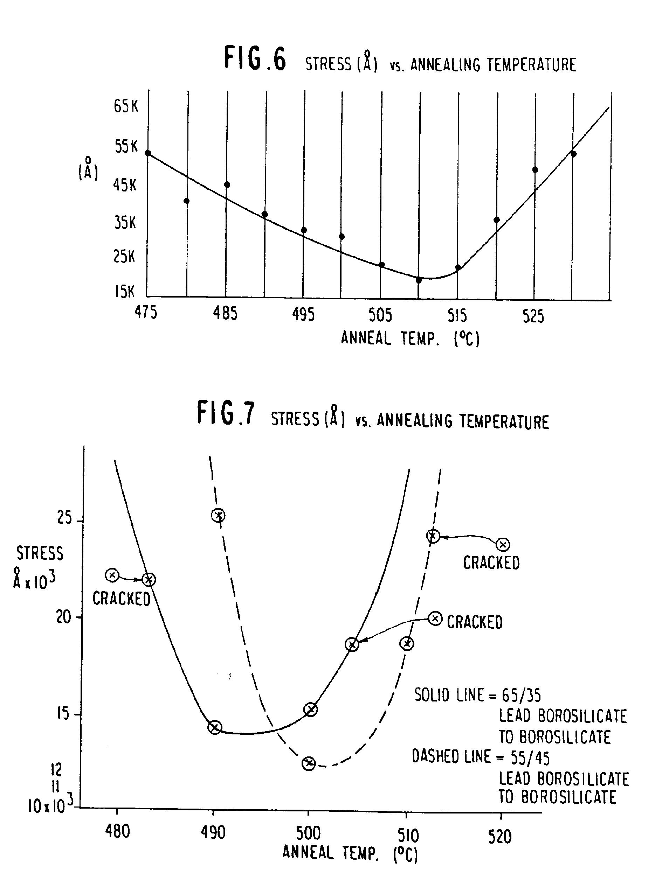

Figure 6 shows experimental bow stress results for the 60/40 glass combination where various anneal temperatures were used. All samples used in the experiment were crack free. The bow stress test is performed by taking the glassed, hipped, and annealed substrate and removing the excess glass from the top of the slots by grinding. In addition, a large slot is ground into the back side of the substrate. If a profile trace is now taken from edge to edge of the substrate across the glass slots, a measure of stress is obtained. The magnitude of the bow being proportional to the resultant stress of the ferrite/glass laminated structure. Bow measurements were taken on ferrite samples of 11 and 22 mm in length. Data shown in Figure 6 has been normalized to the 11 mm sample. From Figure 6 it can be determined that annealing the 60/40 lead borosilicate to borosilicate glass at 510°C yields a glass with the minimum residual stress. The 510°C optimum anneal temperature was implemented in the anneal cycle shown in Figure 5.

Figure 7 shows experimental bow stress results for 65/35 and 55/45 glass combinations where various anneal temperatures were used. The bow stress test was performed as discussed above. Bow measurements were taken on ferrite samples 11 mm in length. Figure 7 indicates some cracking occurs with these combinations under higher stress conditions. These combinations of lead borosilicate and borosilicate glass should be considered the outer limits for an acceptable closure glass.

Wear bar samples were prepared from the glassed, hipped, and annealed ferrite slabs which resulted from the procedures shown in Figures 3 through 5. Wear bar samples are sections of the slab which are cut and milled to have a surface which has alternating ferrite and glass portions.

A sample under test was then worn with PDM Sonoita recording media by passing the tape over the corner of the test sample. This test produces a flat where the tape wears the corner away. A profile trace taken along the worn flat will show the relative height of both the ferrite and glass. From this information, the relative wear rates of both ferrite and glass can be determined.

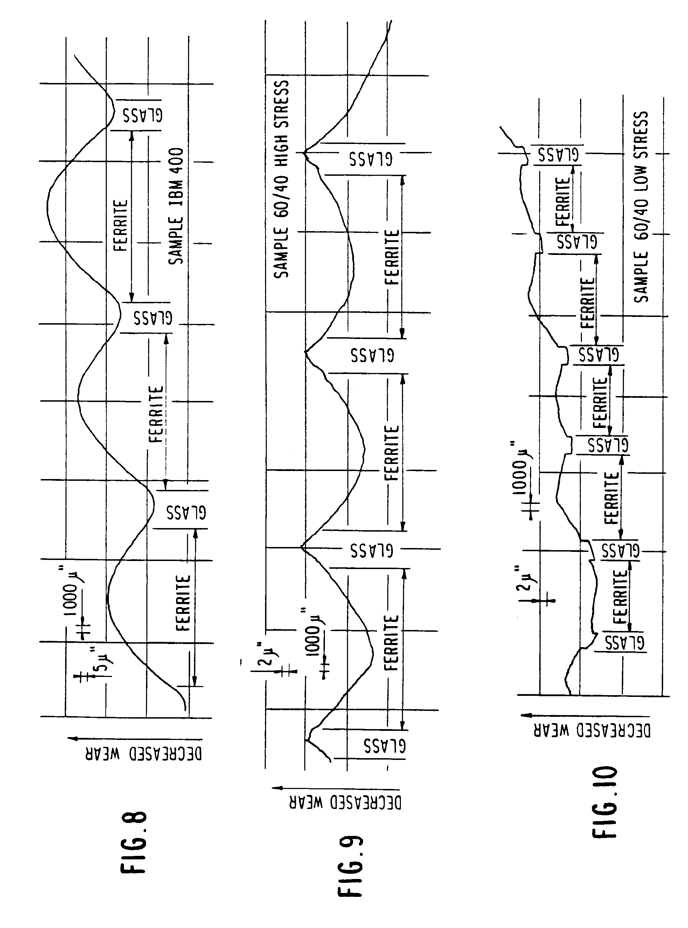

Figures 8 through 10 show wear bar profile results obtained using the abrasivity test discussed above for wear bars having IBM 400 glass, wear bars having high stress 60/40 lead borosilicate to borosilicate glass (i.e., glass annealed at 480°C), and wear bars having low stress 60/40 lead borosilicate to borosilicate glass (i.e., glass annealed at 510°C), respectively. The results for the IBM 400 glass wear bar shown in Figure 8 is used as a reference and its scale is 5μ" along the ordinate by 1000μ" along the abscissa. The scale in both Figures 9 and 10 are 2μ" by 1000μ". In comparison to the IBM 400 glass, the 60/40 lead borosilicate to borosilicate glass wore much less.

Contrasting Figures 9 and 10, it can be seen that the wear characteristics of the 60/40 glass are related to the residual stress in the glass. Figure 9 shows that the higher the stress in the 60/40 glass the less the wear rate, while Figure 10 shows that at low stress, the 60/40 glass wear is approximately the same as NiZn ferrite which is the desired property for the closure glass in a multitrack tape head.

While the invention has been described in terms of its preferred embodiment where specific time-temperature-pressure glassing, hipping, and annealing conditions are utilized, those skilled in the art will recognize that variations in these conditions can be practiced within the scope of the appended claims.

## Claims

1.  A low wear closure glass for use in magnetic tape heads comprising in combination a lead-boro-silicate glass and a boro-silicate glass,
    characterised in that
    the composition of the lead-boro-silicate glass is as follows (in wt %)

    | | |
    |---|---|
    | $SiO_2$ | 3% |
    | $Al_2O_3$ | 11% |
    | $B_2O_3$ | 12% |
    | NaO | 0% |
    | PbO | 74% |

    and the composition of the boro-silicate glass is as follows (in wt %)

    | | |
    |---|---|
    | $SiO_2$ | 81% |
    | $Al_2O_3$ | 2% |
    | $B_2O_3$ | 13% |
    | NaO | 4% |
    | PbO | 0% |

    with the lead-boro-silicate glass being present in the range of 65 to 55 percent by weight and the boro-silicate glass being present in the range of 35 to 45 percent by weight.

2.  A low wear closure glass as claimed in Claim 1 characterised in that the lead-boro-silicate glass is present at approximately 60 percent by weight and the boro-silicate glass is present at approximately 40 percent by weight.

3.  A multitrack tape head having a closure glass produced by the following process:
    mixing lead borosilicate glass according to claim 1 at a weight percent ranging from 65 to 55 percent with borosilicate glass according to claim 1 at a weight percent ranging from 35 to 45 percent, said mixing step producing a glass mixture;
    applying said glass mixture to a slotted ferrite slab;
    glassing said ferrite slab by heating said slotted ferrite slab with said glass mixture to a temperature sufficient to melt said glass mixture, said glassing step producing a glassed ferrite slab;
    hipping said glassed ferrite slab by subjecting said glassed ferrite slab to sufficient temperature and pressure conditions to remove any bubbles present in said glass ferrite slab, said hipping step producing a glassed, hipped ferrite slab; and
    annealing said glassed, hipped ferrite slab at a selected temperature which toughens glass present on said slab.

4.  A multitrack tape head as recited in claim 3 wherein said lead borosilicate glass used in said mixing step is present at approximately sixty percent by weight and said borosilicate glass used in said mixing step is present at approximately forty percent by weight.

5. A multitrack tape head as recited in claim 3 wherein said selected temperature in said annealing step is chosen according to a desired stress level for said glass present on said slab.

6. A multitrack tape head as recited in claim 3 wherein said selected temperature in said annealing step is between 500°C and 520°C.

7. A method for making a closure glass for a multitrack tape head, comprising the steps of:
mixing lead borosilicate glass according to claim 1 at a weight percent ranging from 65 to 55 percent with borosilicate glass according to claim 1 at a weight percent ranging from 35 to 45 percent, said mixing step producing a glass mixture;
applying said glass mixture to a slotted ferrite slab;
glassing said ferrite slab by heating said slotted ferrite slab with said glass mixture to a temperature sufficient to melt said glass mixture, said glassing step producing a glassed ferrite slab;
hipping said glassed ferrite slab by subjecting said glassed ferrite slab to sufficient temperature and pressure conditions to remove any bubbles present in said glass ferrite slab, said hipping step producing a glassed, hipped ferrite slab; and
annealing said glassed, hipped ferrite slab at a selected temperature which toughens glass present on said slab.


## Patentansprüche

1. Ein Niedrigverschleißverschlußglas für die Verwendung bei Magnetbandköpfen, das aus einer Verbindung von Bleiborosilikat- und Borosilikatglas besteht,
dadurch gekennzeichnet, daß
sich Bleiborosilikatglas folgendermaßen zusammensetzt (in Gewichtsprozent):

| | |
|---|---|
| $SiO_2$ | 3% |
| $Al_2O$ | 11% |
| $B_2O_3$ | 12% |
| NaO | 0% |
| PbO | 74%, |

und sich Borosilikatglas folgendermaßen zusammensetzt (in Gewichtsprozent):

| | |
|---|---|
| $SiO_2$ | 81% |
| $Al_2O_3$ | 2% |
| $B_2O_3$ | 13% |
| NaO | 4% |
| PbO | 0%, |

wobei der Anteil an Bleiborosilikatglas innerhalb von 65 bis 55 Gewichtsprozent und der Anteil an Borosilikatglas innerhalb von 35 bis 45 Gewichtsprozent liegt.

2. Ein Niedrigverschleißverschlußglas gemäß Anspruch 1,
dadurch gekennzeichnet, daß
der Gewichtsprozentanteil von Bleiborosilikatglas etwa 60% und der Gewichtsprozentanteil von Borosilikatglas etwa 40% beträgt.

3. Ein Mehrspurbandkopf besitzt ein Verschlußglas, das in folgendem Verfahren ensteht:
Mischen von Bleiborosilikatglas gemäß Anspruch 1 in einem Gewichtsanteil zwischen 65% und 55% mit Borosilikatglas gemäß Anspruch 2 in einem Gewichtsanteil zwischen 35% und 45%, wobei durch diesen Mischvorgang eine Glasmischung entsteht;
Auftragen dieser Glasmischung auf eine geschlitzte Ferritplatte;
Glasieren der Ferrit-Platte durch Erhitzen der geschlitzten Ferrit-Platte mit der Glasmischung auf eine zum Schmelzen dieser Glasmischung ausreichenden Temperatur, wobei durch diese Glasierung eine glasierte Ferrit-Platte ensteht;
Entfernen von Blasen auf der glasierten FerritPlatte, indem die glasierte Ferrit-Platte ausreichender Temperatur- und ausreichendem Druck ausgesetzt ist, um alle auf der Glas-Ferrit-Platte vorhandenen Blasen zu entfernen, wobei durch die Blasenentfernung eine glasierte, blasenfreie Ferrit-Platte ensteht;

sowie

Abkühlen der glasierten, blasenfreien Ferrit-Platte bei einer ausgewählten Temperatur, wodurch das Glas auf der genannten Platte gehärtet wird.

4. Ein Mehrspurbandkopf gemäß Anspruch 3, bei dem das im Mischvorgang verwendete Bleiborosilikatglas etwa sechzig Gewichtsprozent und das im Mischvorgang verwendete Borosilikatglas etwa vierzig Gewichtsprozent umfaßt.

5. Ein Mehrspurbandkopf gemäß Anspruch 3, bei dem die ausgewählte Temperatur bei der Abkühlung entsprechend der gewünschten Belastungsstufe für das genannte Glas auf der Platte ausgewählt wird.

6. Ein Mehrspurbandkopf gemäß Anspruch 3, bei dem die ausgewählte Temperatur bei der Abkühlung zwischen 500 und 520°C beträgt.

7. Eine Methode zur Herstellung von Verschlußglas für einen Magnetbandkopf, die die folgenden Schritte umfaßt:

Mischen von Bleiborosilikatglas gemäß Anspruch 1 in einem Gewichtsanteil zwischen 65 und 55 Prozent mit Borosilikatglas gemäß Anspruch 2 in einem Gewichtsanteil zwischen 35 und 45 Prozent, wobei durch diesen Mischvorgang eine Glasmischung entsteht;

Auftragen dieser Glasmischung auf eine geschlitzte Ferrit-Platte;

Glasieren der Ferrit-Platte durch Erhitzen der geschlitzten Ferrit-Platte mit der Glasmischung auf eine zum Schmelzen dieser Glasmischung ausreichende Temperatur, wobei durch diese Glasierung eine glasierte FerritPlatte ensteht;

Entfernen von Blasen auf der glasierten FerritPlatte, indem die glasierte Ferrit-Platte ausreichender Temperatur und ausreichendem Druck ausgesetzt ist, um alle auf der Glas-Ferrit-Platte vorhandenen Blasen zu entfernen, wobei durch die Blasenentfernung eine glasierte, blasenfreie Ferrit-Platte ensteht; sowie

Abkühlen der glasierten, blasenfreien Ferrit-Platte bei einer ausgewählten Temperatur, wodurch das Glas auf der Platte gehärtet wird.


**Revendications**

1. Verre de fermeture à faible usure pour têtes à bande magnétique comprenant en combinaison un verre au borosilicate de plomb et un verre au borosilicate,

caractérisé en ce que

la composition du verre au borosilicate de plomb est la suivante (en pourcentage en poids):

$SiO_2$ 3%
$Al_2O_3$ 11%
$B_2O_3$ 12%
NaO 0%
PbO 74%

et la composition du verre au borosilicate est la suivante (en pourcentage en poids):

$SiO_2$ 81%
$Al_2O_3$ 2%
$B_2O_3$ 13%
NaO 4%
PbO 0%

le verre au borosilicate de plomb étant présent dans la gamme de pourcentages en poids de 65% à 55%, et le verre au borosilicate étant présent dans la gamme de pourcentages en poids de 35% à 45%.

2. Verre de fermeture à faible usure selon la revendication 1, caractérisé en ce que le verre au borosilicate de plomb est présent dans un pourcentage en poids d'environ 60%, et le verre au borosilicate est présent dans un pourcentage en poids d'environ 40%.

3. Tête à bande à pistes multiples ayant un verre de fermeture produit par le procédé suivante:

mélanger du verre au borosilicate de plomb selon la revendication 1 à un pourcentage en poids allant de 65% à 55% avec du verre au borosilicate selon la revendication 1 à un pourcentage en poids allant de 35% à 45%, ladite étape de mélanger produisant un mélange de verre;

appliquer ledit mélange de verre sur une plaque de ferrite pourvue de fentes;

vitrifier ladite plaque de ferrite en chauffant ladite plaque de ferrite pourvue de fentes avec ledit mélange de verre à une température suffisante pour faire fondre ledit mélange de verre, ladite étape de vitrifier produisant une plaque de ferrite vitrifiée;

traiter au four isostatique ladite plaque de ferrite vitrifiée en y soumettant ladite plaque de ferrite vitrifiée à des conditions de température et de pression suffisantes pour supprimer toutes bulles présentes dans ladite plaque de ferrite en verre, ladite étape de suppression des bulles produisant une plaque de ferrite vitrifiée, non bullée; et

recuire ladite plaque de ferrite vitrifiée, non bullée à une température qui durcisse le verre présent sur ladite plaque.

**4.** Tête à bande à pistes multiples selon la revendication 3, dans laquelle ledit verre au borosilicate de plomb utilisé dans l'étape de mélanger est présent dans un pourcentage en poids d'environ 60%, et ledit verre au borosilicate utilisé dans l'étape de mélanger est présent dans un pourcentage en poids d'environ 40%.

**5.** Tête à bande à pistes multiples selon la revendication 3, dans laquelle ladite température sélectionnée dans ladite étape de recuire est choisie conformément à un niveau de contrainte requis pour ledit verre présent sur ladite plaque.

**6.** Tête à bande à pistes multiples selon la revendication 3, dan laquelle ladite température sélectionnée dans ladite étape de recuire est entre 500°C et 520°C.

**7.** Procédé de fabrication d'un verre de fermeture pour une tête à bande à pistes multiples, comprenant les étapes de:

mélanger le verre au borosilicate de plomb selon la revendication 1 à un pourcentage en poids allant de 65% à 55%, avec le verre au borosilicate selon la revendication 1 à un pourcentage en poids allant de 35% à 45%, ladite étape de mélanger produisant un mélange de verre;

appliquer ledit mélange de verre sur une plaque de ferrite pourvue de fentes;

vitrifier ladite plaque de ferrite en chauffant ladite plaque de ferrite pourvue de fentes avec ledit mélange de verre, ladite étape de vitrifier produisant une plaque de ferrite vitrifiée;

traiter au four isostatique ladite plaque de ferrite vitrifiée en y soumettant ladite plaque de ferrite vitrifiée à des conditions de température et de pression suffisantes pour supprimer toutes bulles présentes dans ladite plaque de ferrite en verre, ladite étape de suppression des bulles produisant une plaque de ferrite vitrifiée, non bullée; et

recuire ladite plaque de ferrite vitrifiée, non bullée à une température sélectionnée qui durcisse le verre présent sur ladite plaque.

FIG.1

FIG.2

FIG. 3

FIG. 4

FIG. 5

## FIG.6 STRESS (Å) vs. ANNEALING TEMPERATURE

## FIG.7 STRESS (Å) vs. ANNEALING TEMPERATURE

FIG.8

FIG.9

FIG.10